# FASCICULE DE BREVET EUROPEEN

(11) **EP 3 344 879 B1**
(45) Date de publication et mention de la délivrance du brevet: **30.10.2019**
(21) Numéro de dépôt: 16775766.5
(22) Date de dépôt: 02.09.2016
(51) Int. Cl.: F04D 29/54, F04D 29/68, F01D 5/14, F01D 9/04, F02K 3/06, F02C 7/20

(54) **DIMENSIONNEMENT DE L'ANGLE SQUELETTE DE BORD DE FUITE DES BRAS TRAVERSANT LE FLUX SECONDAIRE D'UNE TURBOMACHINE À DOUBLE FLUX**
AUSLEGUNG DES HINTERKANTEN-SKELETTLINIENWINKELS DER STREBEN, DIE DEN NEBENSTROM EINER TURBOMASCHINE MIT BYPASS-STRÖMUNG DURCHQUEREN
DESIGN OF THE TRAILING EDGE SKELETON ANGLE OF STRUTS CROSSING THE SECONDARY FLOW OF A TURBOMACHINE WITH BYPASS FLOW

(30) Priorité: 02.09.2015 FR 1558123
(43) Date de publication de la demande: 11.07.2018
(73) Titulaire: Safran Aircraft Engines, 75015 Paris (FR)
(72) Inventeur: MADIOT, Ghislain, Maxime, Romuald, 77550 Moissy-cramayel Cedex (FR); BERTUCCHI, Jean, 77550 Moissy-cramayel (FR); CELLIER, Damien, Joseph, 77550 Moissy-Cramayel Cedex (FR); KERNEMP, Irwin, 77550 Moissy-cramayel (FR); MAZZELLA, Aurélien, 77550 Moissy-cramayel (FR)
(74) Mandataire: Regimbeau
(86) Numéro de dépôt international: PCT/FR2016/052176
(87) Numéro de publication internationale: WO 2017/037399

(56) Documents cités:
- FR-A1- 3 004 749
- US-A1- 2011 255 964

## Description

### DOMAINE TECHNIQUE GENERAL

La présente invention concerne une pièce d'étage redresseur de flux secondaire d'une turbomachine à double flux, comprenant une pluralité d'obstacles.

### ETAT DE L'ART

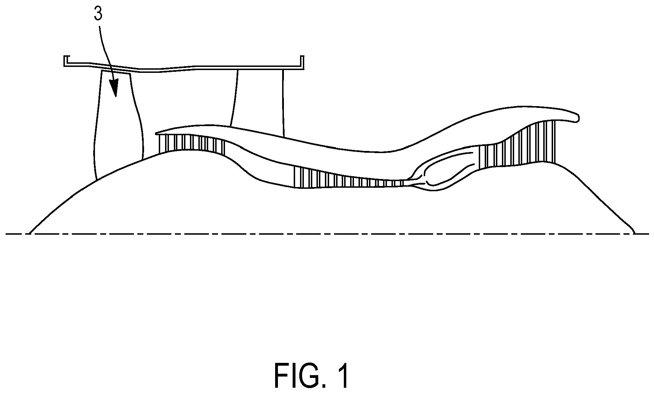

Une turbomachine à double flux du type de la **figure 1** présente une soufflante (ou « fan ») comprimant une grande masse d'air froid, dont une part est injectée dans le compresseur et chauffée (flux primaire), le reste formant un écoulement cylindrique (flux secondaire) enveloppant le moteur, redressé par une grille d'OGV (« Outlet Guide Vane », redresseur de flux secondaire) et dirigé vers l'arrière pour créer de la poussée.

Pour cela, la turbomachine comprend typiquement un moyeu bornant la veine d'air secondaire de façon interne, et un carter bornant la veine d'air secondaire de façon externe. Des bras lient radialement les deux (le moyeu est fixe par rapport au carter, et mobile par rapport à l'arbre central), et transmettent une partie des efforts entre le moteur et son support.

Dans les bras passent diverses servitudes intégrant des composants du moteur (telles qu'un tube d'huile ou de carburant, des câbles, etc.). Deux des bras, nettement plus massifs, et généralement placés au sommet et à la base, sont appelés pylônes et servent de structure porteuse permettant de relier la turbomachine à un aéronef.

Les bras et/ou les pylônes peuvent être réunis dans la même structure que les OGV, et être alors dits « intégrés », comme l'on voit sur la **figure 2a** (il s'agit d'une vue de l'arrière). Le document FR 3 004 749 A1 divulgue une telle configuration.

Les termes « amont » et « aval » sont définis par rapport à la circulation de l'air dans la turbomachine.

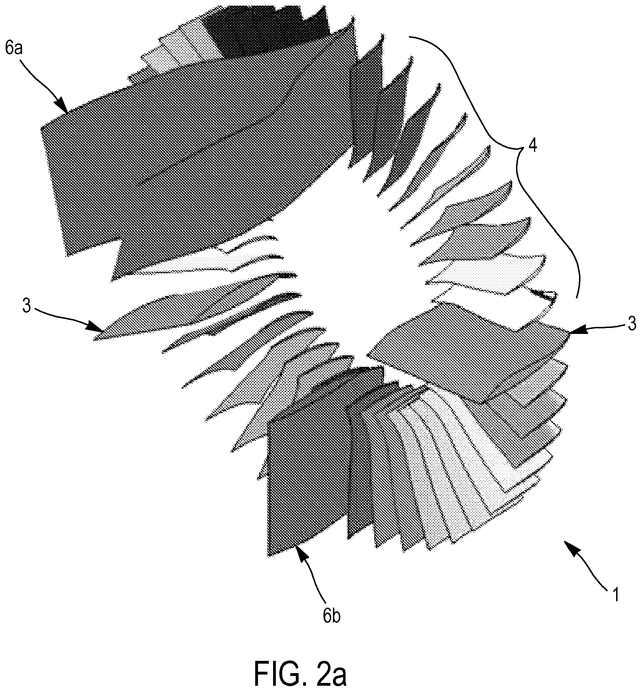

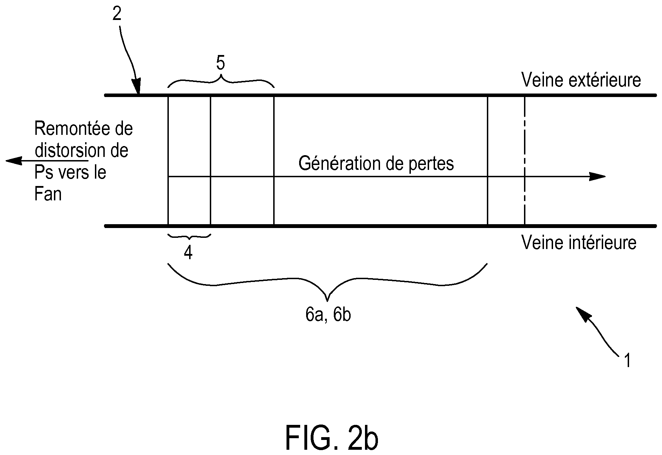

Comme expliqué, les OGV ont pour fonction de redresser le flux secondaire, mais on constate qu'à leur aval persiste une giration résiduelle pour l'écoulement. Cette légère giration peut engendrer d'importants décollements au niveau du bord de fuite des bras ou pylônes, remarquable par exemple sur le bras 3h sur la droite de la **figure 2b** (qui représente les déficits de pression totale à l'aval de la structure de la figure 2a), puisqu'est demandée à ce niveau une forte déviation au fluide.

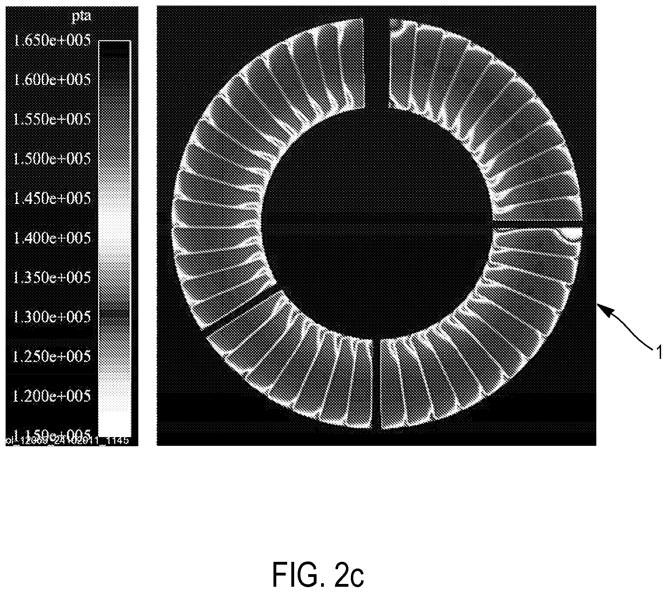

Par conséquent on constate une forte augmentation des pertes et une remontée de distorsion de la pression statique vers l'amont, comme l'on voit sur la **figure 2c**, qui représente schématiquement une coupe 2D de la figure 2a.

Il serait ainsi souhaitable d'atténuer ou d'annuler ces décollements de sorte à améliorer la performance des turbomachines.

### PRESENTATION DE L'INVENTION

La présente invention propose ainsi selon un premier aspect un étage redresseur de flux secondaire d'une turbomachine à double flux tel que défini par la revendication 1.

Cette géométrie particulière du bord de fuite d'un pylône permet de réduire les effets de la déviation du flux et d'éviter le décollement. Selon d'autres caractéristiques avantageuses et non limitatives :
- ladite valeur de fuite est comprise entre 5° et 13°, préférentiellement entre 7° et 11°;
- ledit bras présente une position de début d'inclinaison située à entre 40% et 80% de longueur relative d'une corde s'étendant d'un bord d'attaque à un bord de fuite du bras, ledit angle squelette présentant entre la position de début de courbure et le bord de fuite ladite valeur de fuite ;
- la position de début d'inclinaison est située entre 50% et 70% de longueur relative de corde ;
- l'extrados ou l'intrados du bras est sensiblement rectiligne entre la position de début d'inclinaison et le début de la fermeture du bord de fuite.
- un bras n'étant pas un pylône et situé à l'extrados du pylône est défini par un angle squelette présentant au niveau du bord de fuite ladite valeur de fuite, ledit angle squelette au niveau du bord de fuite étant orienté de sorte à rapprocher l'extrados du bras de l'axe longitudinal de la turbomachine ;
- un bras n'étant pas un pylône et situé à l'intrados du pylône est défini par un angle squelette présentant au niveau du bord de fuite ladite valeur de fuite, ledit angle squelette au niveau du bord de fuite étant orienté de sorte à rapprocher l'intrados du bras de l'axe longitudinal de la turbomachine ;
- ladite valeur de fuite augmente en valeur absolue avec la proximité du bras avec le pylône.

Selon un deuxième aspect, l'invention concerne une turbomachine comprenant une pièce selon le premier aspect.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 précédemment décrite représente un exemple de turbomachine ;
- les figures 2a-2c illustrent des géométries de redresseurs du flux secondaire, et les phénomènes physiques qu'elles génèrent ;
- la figure 3 représente en détail les lignes de courant du flux dans un étage redresseur de flux secondaire;
- les figures 4a-4c représentent trois cas de géométries de profils de bras dans une pièce de redresseur, et la figure 4c donne un exemple de réalisaton de l'invention;
- les figures 5a-5c représentent des pentes d'extrados ou d'intrados des géométries des figures 4a-4c
- les figures 6a-6b et 7a-7b comparent les effets de géométries connues ou conformes à l'invention.

### DESCRIPTION DETAILLEE

La présente invention concerne une pièce 1 (ou ensemble de pièces si elle n'est pas monobloc) de turbomachine présentant une pluralité d'obstacles 4, 5, 6a, 6b et une plateforme 2 à partir de laquelle s'étendent les obstacles 4, 5, 6a, 6b.

Une turbomachine à double flux comprend typiquement comme précédemment expliqué un moyeu bornant la veine d'air secondaire de façon interne, et un carter bornant la veine d'air secondaire de façon externe. Des bras lient radialement les deux, et transmettent une partie des efforts entre le moteur et son support.

La présente pièce ou ensemble de pièce 1 est une pièce d'étage de redresseur du flux secondaire, en particulier une couronne de pales fixes (appelées OGV pour « Outlet Guide Vane ») est disposée le plus souvent en sortie du rotor de la soufflante 3.

Le terme « obstacle » désigne tout élément disposé en travers du flux d'air et ayant une influence sur son écoulement, présentant un bord d'attaque BA, un bord de fuite BF, un intrados et un extrados.

Il s'agit pour la plupart de pales 4 de l'OGV, mais au moins un des obstacles est un bras 5, 6a, 6b, c'est-à-dire un élément plus large, plus long et moins profilé que les pales 4, ayant comme expliqué une fonction structurelle plus qu'aérodynamique, en particulier pour la liaison de la plateforme 2 à un carter ou un moyeu de la pièce 1 et/ou le passage de servitudes. En particulier, on comprendra que les bras 5, 6a, 6b présentent un bord de fuite nettement en aval (par rapport à l'écoulement de fluide) du bord de fuite des pales 4.

De façon générale, on comprendra que les obstacles 5, 6a, 6b sont choisis parmi des pales 4 et des bras 5, 6a, 6b, ces derniers pouvant eux-mêmes être de plusieurs types.

De façon préférée, comme l'on voit sur la figure 2a, un ou deux des bras sont des pylônes, en particulier un pylône principal 6a disposé au sommet du la pièce 1 (position dite 12h), et/ou un pylône secondaire 6b disposé à la base de la pièce 1 (position dite 6h). Les deux pylônes sont ainsi diamétralement opposés. Les pylônes 6a, 6b sont nettement plus massifs que les autres bras 5 (lesquels sont eux même nettement plus massifs que les pales 4), et le pylône principal 6a est lui-même sensiblement plus massif que le pylône secondaire 6b. En d'autres termes, les pylônes 6a, 6b (et particulièrement le pylône principal 6a) présentent un bord de fuite nettement en aval du bord de fuite des autres bras 5. Ces derniers peuvent être disposés régulièrement ou non entre les pylônes 6a, 6b. Dans la suite de la présente description, on prendra en particulier l'exemple du bras dit 3h disposé entre l'extrados du pylône principal 6a et l'intrados du pylône 6b.

Les pylônes sont des éléments de supports de toute la turbomachine, en particulier le pylône principal 6a qui permet une fixation à un aéronef.

Le terme plateforme est ici interprété au sens large et désigne de façon générale tout élément d'une turbomachine sur lequel des obstacles 4, 5, 6a, 6b sont aptes à être montées (en s'étendant radialement) et présentant une paroi interne/externe contre laquelle l'air circule. La plateforme 2 présente en général une forme annulaire le long de laquelle est disposée ladite pluralité d'obstacles 4, 5, 6a, 6b.

En particulier, la plateforme 2 peut être monobloc (et ainsi supporter l'ensemble des pales de la pièce 1), ou formée d'une pluralité d'organes élémentaires chacun supportant une unique pale 4 (un « pied » de la pale 4) de sorte à constituer une aube.

En outre, la plateforme 2 peut délimiter une paroi radialement intérieure de la pièce 1 (le gaz passe autour) en définissant un moyeu, et/ou bien une paroi radialement extérieure de la pièce 1 (le gaz passe à l'intérieur, les pales 3 s'étendent vers le centre) en définissant alors un carter de la pièce 1. Il est à noter qu'une même pièce 1 peut comprendre simultanément ces deux types de plateforme 2, ce qui est typiquement le cas des OGV.

### Influence du pylône

La demanderesse a constaté que les importants décollements et recirculations de fluide en partie supérieure des bras sont essentiellement dus à l'influence des bras les uns sur les autres, en particulier l'influence des pylônes 6a, 6b sur les bras classiques 5, due à leur différence de taille.

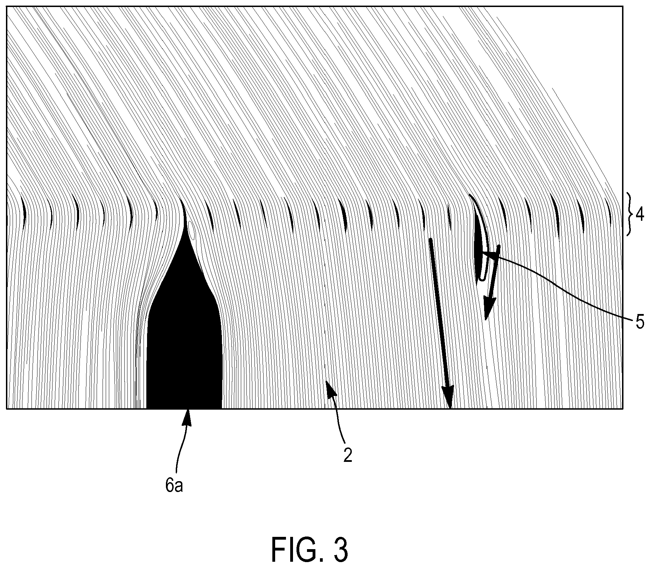

En référence à la **figure 3**, qui représente les impacts aérodynamiques sur une géométrie connue, on observe ainsi que le pylône principal 6a provoque une bifurcation du fluide qui vient dévier le fluide de part et d'autre. Plus précisément, à l'extrados du pylône principal 6a le fluide présente une légère rotation tendant à faire s'éloigner le fluide de l'extrados de ce pylône principal 6a (rotation horaire, i.e. antitrigonométrique, en vue depuis l'arrière de la turbomachine dans l'exemple représenté, où l'extrados est à droite et l'intrados à gauche), et à l'intrados du pylône principal 6a le fluide présente une légère rotation tendant à faire s'éloigner le fluide de l'intrados de ce pylône principal 6a (rotation antihoraire, i.e. trigonométrique, en vue depuis l'arrière de la turbomachine dans l'exemple représenté)

Le bras 3h, que l'on voit sur cette figure 3, est situé à l'extrados du pylône principal 6a. Et de façon connue la partie aval d'un bras 5, 6a, 6b (i.e. la partie terminée par le bord de fuite BF) suit une géométrie sensiblement axiale. Cela signifie que la partie de fuite du bras 5, 6a, 6b est sensiblement symétrique par rapport à l'axe longitudinal de la turbomachine, ce qui est cohérent avec la fonction recherchée de redressement du flux.

Or, du fait de la déviation causée par le pylône principal 6a, le fluide vient percuter l'intrados du bras 5, et au contraire ne suit pas l'extrados du bras 5, d'où le décollement (que l'on voir très bien sur la figure 2b). Un effet similaire, mais symétrique survient à l'intrados du pylône 6a. En outre, des effets similaires, bien que moindres, sont causés par le pylône secondaire 6b.

Par « axe longitudinal de la turbomachine », on entend l'axe de symétrie de la turbomachine, qui coïncide avec l'axe de rotation de l'arbre et de la soufflante 3. De manière générale dans la suite du texte, quand il est fait référence à l'axe longitudinal de la turbomachine et à la valeur de fuite, cette valeur par rapport cet axe un angle se comprend au regard de la direction de l'axe longitudinal de la turbomachine (appelée simplement direction longitudinale par la suite), c'est-à-dire en raisonnant en projection sur un plan tangent à la plateforme 2 et non en absolu dans l'espace.

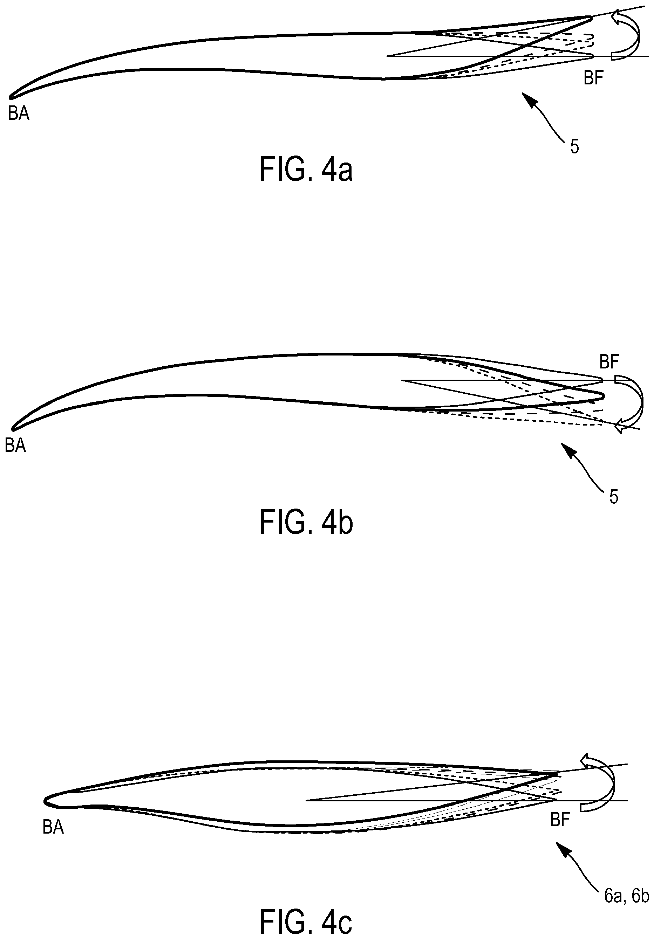

Par conséquent, en référence aux **figures 4a-4c** (qui compare des profils connus et conformes à l'invention), la présente pièce 1 se distingue par une géométrie particulière d'au moins un obstacle de type bras, qu'il soit un bras 5 « classique », ou un pylône 6a, 6b. Chacun des trois cas associés sera décrit plus loin.

L'idée est de modifier la pente extrados et/ou intrados de ces bras pour prendre en compte et/ou limiter (selon le bras impliqué) l'influence de la bifurcation causée par le pylône principal 6a et les pales 4 sur le champ de fluide.

On propose ainsi de modifier cette partie de fuite en l'orientant de 5° à 13° par rapport à la géométrie de base. Comme l'on verra, cette variation en 5° à 13° est en valeur absolue et peut être positive ou négative selon les cas.

En d'autres termes, en utilisant un squelette du bras (c'est-à-dire la courbe passant l'ensemble des milieux des segments perpendiculaires à la corde de référence de la coupe, i.e. la corde s'étendant du bord d'attaque BA au bord de fuite BF du bras 5, 6a, 6b), ce squelette du bras est choisi de sorte à présenter au-delà d'un « point de début d'inclinaison », ledit angle de 5° à 13° par rapport à l'axe longitudinal de la turbomachine. En utilisant la « loi d'angle squelette », qui correspond à la dérivée du squelette de la coupe de la pale, cela signifie qu'au-delà dudit point de début d'inclinaison l'angle squelette présente ladite valeur (en valeur absolue) entre 5° et 13°, i.e. que la dérivée (en position d'une position axiale) est entre tan 5° et tan 13°. Dans la suite de la description on désignera par « valeur de fuite » la valeur de l'angle squelette au niveau du bord de fuite, et ce indépendamment de son signe.

Ce choix peut sembler contradictoire avec l'objectif de redressement du flux, mais comme l'on verra plus loin les tests du Demandeur démontrent un gain de rendement.

L'objectif de cette déviation est d'aligner l'intrados/l'extrados (selon les cas) du bras avec la direction du champ de fluide de sorte à limiter le décollement et supprimer les effets négatifs associés.

La position de début d'inclinaison (i.e. la position de début de variation de l'angle squelette par rapport à des géométries de référence) évoquée avant est avantageusement située à entre 40% et 80% (préférentiellement entre 50 et 70%, et encore préférentiellement autour de 60%) de longueur relative d'une corde s'étendant du bord d'attaque BA au bord de fuite BF du bras 5, 6a, 6b.

Ainsi, le point de début d'inclinaison est avantageusement voisin de la zone d'épaisseur maximale du bras.

En amont de ce point, le bras est avantageusement inchangé, et en aval (i.e. entre la position de début de courbure et le bord de fuite BF), ledit angle squelette présente avantageusement ladite valeur de fuite entre 5° et 13°.

En aval de ce point (plus précisément jusqu'au début de la fermeture du bord de fuite BF), l'extrados ou l'intrados (selon les cas, comme l'on verra plus loin) du bras 5, 6a, 6b est avantageusement sensiblement rectiligne.

Par « fermeture du bord de fuite », on entend les quelques derniers pourcents (typiquement les cinq derniers pourcents) de la longueur de corde qui présentent une forme arrondie, car il n'est pas possible physiquement avoir une arête parfaite à l'extrémité du bras (cela impliquerait une dérivée non continue), et en pratique le bord de fuite présente une tangente orthogonale à la ligne squelette. Ainsi, au niveau du point de début de fermeture, l'angle squelette varie très brutalement de sorte à pouvoir fermer la géométrie. On trouve une fermeture similaire au niveau du bord d'attaque BA.

En d'autres termes, on pourra considérer que l'extrados ou l'intrados peut être sensiblement rectiligne quasiment jusqu'au bord de fuite, aux imprécisions près dues à la fermeture de la géométrie au niveau du bord de fuite.

### Premier cas - bras classique extrados

La figure 4a représente le cas d'un bras classique 5 situé à l'extrados d'un pylône 6a, 6b, en particulier à l'extrados du pylône principal 6a. En référence à la figure 2a, il s'agit du ou des bras classiques 5 situés dans la partie droite de cette figure.

Comme expliqué, dans un tel cas le flux dévié par le pylône 6a, 6b de sorte à s'en écarter (rotation en sens antitrigonométrique) a tendance à percuter l'intrados du bras 5 et se décoller de l'extrados du bras 5.

Ainsi, ledit angle de fuite de 5° à 13° est choisi dans le sens intrados vers extrados, de sorte à augmenter la pente de l'intrados et limiter la pente de l'extrados, en d'autres termes rapprocher l'extrados de l'axe longitudinal de la turbomachine (c'est-à-dire faire tendre son orientation vers la direction longitudinale, voir plus loin).

Dans notre exemple, il s'agit d'un angle de +5° à +13° (sens trigonométrique). Cet angle est préférentiellement entre +7° et +11°, et encore plus avantageusement autour de +9°.

Par ailleurs, il est à noter que l'angle peut dépendre de la proximité avec le pylône principal 6a : s'il y a plusieurs bras classiques 5 entre le pylône principal 6a et le pylône secondaire 6b, plus le bras est proche du pylône principal plus l'angle est choisi élevé.

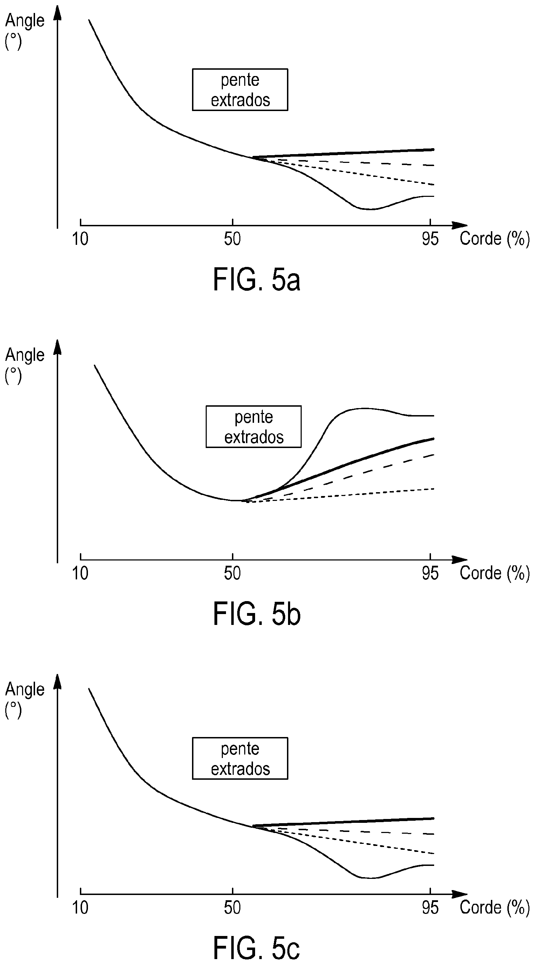

En référence à la **figure 5a**, qui représente la pente extrados (toujours par rapport à l'axe longitudinal de la turbomachine) d'un bras 5, on observe au-delà du point de début de courbure une augmentation de la dérivée, qui prend une valeur (avantageusement sensiblement constante au-delà du point de début de courbure, comme il va être expliqué) entre -14 et +10. Cela donne un angle extrados de sortie prenant une valeur sensiblement plus élevée que dans l'état de la technique, i.e. entre -6° et +6° (toujours par rapport à l'axe longitudinal de la turbomachine), avantageusement autour de 0°, i.e. un extrados rapproché, voire sensiblement aligné avec l'axe de la turbomachine.

La pente d'extrados est avantageusement quasi-rectiligne (dérivée seconde nulle) sur au moins les 20% finaux de la corde, avantageusement au-delà du point de début de courbure (à la fermeture du bord de fuite près).

### Deuxième cas - bras classique intrados

La figure 4b représente le cas d'un bras classique 5 situé à l'intrados d'un pylône 6a, 6b, en particulier à l'intrados du pylône principal 6a. En référence à la figure 2a, il s'agit du ou des bras classiques 5 situés dans la partie gauche de cette figure.

Comme expliqué, dans un tel cas le flux dévié par le pylône 6a, 6b de sorte à s'en écarter (rotation en sens trigonométrique) à tendance à percuter l'extrados du bras 5 et se décoller de l'intrados du bras 5.

Ainsi, ledit angle de fuite de 3° à 15° est choisi dans le sens extrados vers intrados, de sorte à augmenter la pente de l'extrados et limiter la pente de l'intrados, en d'autres termes rapprocher l'intrados de l'axe longitudinal de la turbomachine (c'est-à-dire faire tendre son orientation vers la direction longitudinale, voir plus loin).

Dans notre exemple, il s'agit d'un angle de -13° à -5° (sens antitrigonométrique). Cet angle est préférentiellement entre entre -11° et - 7°, et encore plus avantageusement autour de -9°.

Par ailleurs, il est à noter que l'angle peut dépendre de la proximité avec le pylône principal 6a : s'il y a plusieurs bras classiques 5 entre le pylône principal 6a et le pylône secondaire 6b, plus le bras est proche du pylône principal plus l'angle est choisi bas (i.e. élevé en valeur absolue).

En référence à la **figure 5b**, qui représente la pente intrados (toujours par rapport à l'axe longitudinal de la turbomachine) d'un bras 5, on observe au-delà du point de début de courbure une diminution de la dérivée, qui prend une valeur (avantageusement sensiblement constante au-delà du point de début de courbure, comme il va être expliqué) entre -1 et +20. Cela donne un angle intrados de sortie prenant une valeur sensiblement plus basse que dans l'état de la technique, i.e. entre -6° et +6° (toujours par rapport à l'axe longitudinal de la turbomachine), avantageusement autour de 0°, i.e. un intrados rapproché, voire sensiblement aligné avec l'axe de la turbomachine.

La pente d'intrados est avantageusement quasi-rectiligne (dérivée seconde nulle) sur au moins les 20% finaux de la corde, avantageusement au-delà du point de début de courbure (à la fermeture du bord de fuite près).

En résumé, au moins un (préférentiellement une pluralité de) bras 5 n'étant pas un pylône 6a, 6b est défini par un angle squelette présentant au niveau du bord de fuite BF ladite valeur de fuite comprise entre 5° et 13° (en valeur absolue) par rapport à l'axe longitudinal de la turbomachine.

Soit le bras 5 dont il est question est situé à l'extrados du pylône 6a, 6b, et alors ledit angle squelette au niveau du bord de fuite BF est orienté de sorte à rapprocher l'extrados du bras 5 de l'axe longitudinal de la turbomachine (en d'autres termes l'angle de fuite est positif, c'est-à-dire orienté dans le sens trigonométrique).

Soit le bras 5 dont il est question est situé à l'intrados du pylône 6a, 6b, et alors ledit angle squelette au niveau du bord de fuite BF est orienté de sorte à rapprocher l'intrados du bras 5 de l'axe longitudinal de la turbomachine (en d'autres termes l'angle de fuite est négatif, c'est-à-dire orienté dans le sens antitrigonométrique).

On comprendra bien qu'il est tout à fait possible de combiner les deux types de déviations dans une même turbomachine. En effet cela peut concerner chaque bras 5 n'étant pas un pylône (aussi bien à l'extrados qu'à l'intrados), mais de façon préférée les bras à une certaine distance (en termes angulaire) de tout pylône 6a, 6b ne sont pas concerné, en d'autres termes ladite valeur de fuite est appliquée pour tout bras 5 à moins de ladite certaine distance d'un pylône 6a, 6b.

Dans tous les cas, de façon préférée ladite valeur de fuite augmente en valeur absolue avec la proximité du bras 5 avec le pylône 6a, 6b, c'est dire que plus le bras 5 est loin du pylône 6a, 6b, plus la direction du squelette au niveau du bord de fuite BF est éloignée de la direction longitudinale de la turbomachine. La variation peut être entre de différent types : par exemple si on définit que le 1^{er} bras 5 voisin du pylône 6a, 6b a une valeur de fuite maximale - par exemple 13°, et que le n-ième bras voisin du pylône 6a, 6b a la valeur de fuite minimale - par exemple 5°, et entre les deux la valeur de fuite peut varier linéairement, polynomialement, hyperboliquement, etc. (mais monotonement), de la valeur minimale à la valeur maximale

### Troisième cas - pylône -- exemple de réalisation de l'invention

La figure 4c représente le cas d'un pylône 6a, 6b (en l'espèce le pylône principal 6a). Comme expliqué, ces pylônes 6a, 6b ont tendance à générer de fortes distorsion de pression au niveau de leur extrados (puisque naturellement, avant redressement le sens de rotation du fluide est celui de la rotation de la soufflante 3, et vient rencontrer tous les obstacles 4, 5, 6a, 6b sous leur intrados, voir figure 3).

Ainsi, ledit angle de fuite de 5° à 13° est choisi dans le sens intrados vers extrados, de sorte à augmenter la pente de l'intrados et limiter la pente de l'extrados, en d'autres termes rapprocher l'extrados de l'axe longitudinal de la turbomachine (c'est-à-dire faire tendre son orientation vers la direction longitudinale, voir plus loin). Dans notre exemple, il s'agit d'un angle de +5° à +13° (sens trigonométrique). Cet angle est préférentiellement +7° et +11°, et encore plus avantageusement autour de +9°.

En référence à la **figure 5c**, qui représente la pente extrados (toujours par rapport à l'axe longitudinal de la turbomachine) du pylône 6a, on observe au-delà du point de début de courbure une augmentation de la dérivée, qui prend une valeur (avantageusement sensiblement constante au-delà du point de début de courbure, comme il va être expliqué) entre -14 et +10. Cela donne un angle extrados de sortie prenant une valeur sensiblement plus élevée que dans l'état de la technique, i.e. entre -6° et +6° (toujours par rapport à l'axe longitudinal de la turbomachine), avantageusement autour de 0°, i.e. un extrados rapproché, voire sensiblement aligné avec l'axe de la turbomachine.

La pente d'extrados est avantageusement quasi-rectiligne (dérivée seconde nulle) sur au moins les 20% finaux de la corde, avantageusement au-delà du point de début de courbure (à la fermeture du bord de fuite près).

### Effets

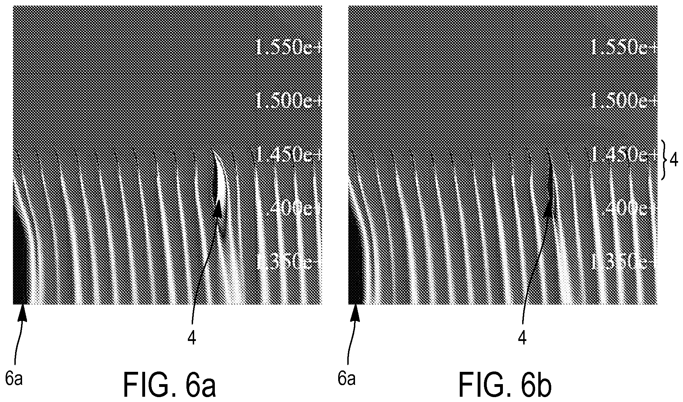

Les **figures 6a et 6b** comparent le décollement sur l'extrados du bras 3h (que l'on voyait sur la figure 2c dans un plan perpendiculaire) à une hauteur de 90%. Comme l'on voit, le gradient de pression est sensiblement réduit et le décollement éliminé. La recirculation est également éliminée.

Les tests associés montrent une diminution des pertes OGV de 0.02%, une diminution des pertes OGV/bras de 0.03%, une diminution des pertes fairing de 0.01%, et une baisse de la distorsion de pression statique de 1.5%. En résumé, les pertes sont diminuées de 0.03% et la distorsion en sortie de soufflante est réduite de 0.3%.

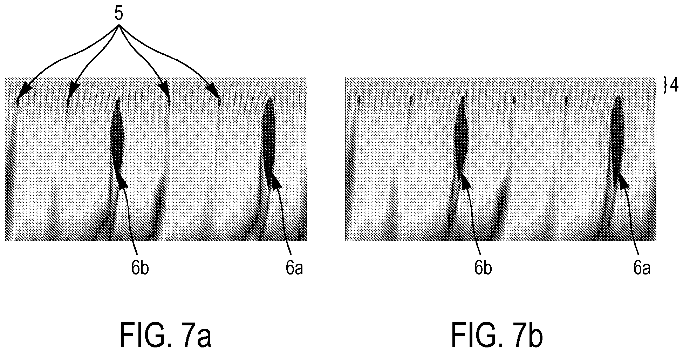

Les **figures 7a et 7b** comparent le décollement sur l'extrados des pylônes 12h/6h à une hauteur de 50%. Comme l'on voit, le décollement est sensiblement réduit ainsi que l'épaisseur des sillages à l'aval des pylônes.

Les tests associés montrent une diminution des pertes fairing de 0.02%, et une baisse de la distorsion de pression statique de 0.3%. En résumé, les pertes sont diminuées de 0.02% et la distorsion en sortie de soufflante est réduite de 0.3%.

Les gains viennent du fait que moins « d'effort » est demandé au fluide au niveau de l'extrados de l'aube. Le besoin de déviation pour « fermer » le profil au bord de fuite est reporté partiellement ou tout sur l'intrados, ce qui permet d'obtenir le gain précité.

## Revendications

1. Étage redresseur de flux secondaire d'une turbomachine à double flux, comprenant
- une pluralité d'obstacles (4, 5, 6a, 6b) dont au moins une pale (4) et au moins un bras (5, 6a, 6b),
- une plateforme (2) à partir de laquelle s'étendent les obstacles (4, 5, 6a, 6b),
**caractérisée en ce qu'**un bras (5, 6a, 6b) étant un pylône (6a, 6b) est défini par un angle squelette présentant au niveau du bord de fuite (BF) une valeur de fuite comprise entre 5° et 13° par rapport à l'axe longitudinal de la turbomachine, ledit angle squelette au niveau du bord de fuite (BF) étant orienté de sorte à rapprocher l'extrados du pylône (6a, 6b) de l'axe longitudinal de la turbomachine.

2. Étage redresseur selon la revendication 1, dans lequel ladite valeur de fuite est comprise entre 7° et 11°.

3. Étage redresseur selon l'une des revendications 1 et 2, dans lequel ledit bras (5, 6a, 6b) présente une position de début d'inclinaison située à entre 40% et 80% de longueur relative d'une corde s'étendant d'un bord d'attaque (BA) au bord de fuite (BF) du bras (5, 6a, 6b), ledit angle squelette présentant entre la position de début de courbure et le bord de fuite (BF) ladite valeur de fuite.

4. Étage redresseur selon la revendication 3, dans lequel la position de début d'inclinaison est située à entre 50% et 70% de longueur relative de corde.

5. Étage redresseur selon l'une des revendications 1 à 4, dans lequel l'extrados ou l'intrados du bras (5, 6a, 6b) est sensiblement rectiligne entre la position de début d'inclinaison et le début de la fermeture du bord de fuite

6. Étage selon l'une des revendications 1 et 5, dans lequel au moins un bras (5) n'étant pas un pylône (6a, 6b) est défini par un angle squelette présentant au niveau du bord de fuite (BF) ladite valeur de fuite.

7. Étage selon la revendication 6, dans lequel ledit bras (5) n'étant pas un pylône (6a, 6b) est situé à l'extrados du pylône (6a, 6b), ledit angle squelette au niveau du bord de fuite (BF) étant orienté de sorte à rapprocher l'extrados du bras (5) de l'axe longitudinal de la turbomachine.

8. Étage selon l'une des revendications 6 et 7, dans lequel ledit bras (5) n'étant pas un pylône (6a, 6b) est situé à l'intrados du pylône (6a, 6b), ledit angle squelette au niveau du bord de fuite (BF) étant orienté de sorte à rapprocher l'intrados du bras (5) de l'axe longitudinal de la turbomachine.

9. Etage selon l'une des revendications 7 et 8, dans lequel ladite valeur de fuite augmente en valeur absolue avec la proximité du bras (5) avec le pylône (6a, 6b).

10. Turbomachine comprenant un étage redresseur de flux secondaire selon l'une des revendications précédentes.

## Patentansprüche

1. Nebenstrom-Leitschaufelstufe einer Turbomaschine mit Bypass-Strömung, umfassend
- eine Vielzahl von Hindernissen (4, 5, 6a, 6b), darunter mindestens ein Blatt (4) und mindestens ein Arm (5, 6a, 6b),
- eine Plattform (2), ab der sich die Hindernisse (4, 5, 6a, 6b) erstrecken,
**dadurch gekennzeichnet, dass** ein Arm (5, 6a, 6b), der ein Pylon (6a, 6b) ist, durch einen Skelettwinkel definiert ist, der im Bereich der Hinterkante (BF) einen Ausströmungswert aufweist, der zwischen 5° und 13° in Bezug auf die Längsachse der Turbomaschine liegt, wobei der Skelettwinkel im Bereich der Hinterkante (BF) derart ausgerichtet ist, dass die Oberseite des Pylons (6a, 6b) an die Längsachse der Turbomaschine angenähert wird.

2. Leitschaufelstufe nach Anspruch 1, wobei der Ausströmungswert zwischen 7° und 11° liegt.

3. Leitschaufelstufe nach einem der Ansprüche 1 und 2, wobei der Arm (5, 6a, 6b) eine Position zu Beginn der Neigung aufweist, die bei zwischen 40 % und 80 % der relativen Länge eines Seils liegt, das sich von einer Vorderkante (BA) zur Hinterkante (BF) des Arms (5, 6a, 6b) erstreckt, wobei der Skelettwinkel zwischen der Position zu Beginn der Krümmung und der Hinterkante (BF) dem Ausströmungswert entspricht.

4. Leitschaufelstufe nach Anspruch 3, wobei sich die Position zu Beginn der Neigung bei zwischen 50 % und 70 % der relativen Seillänge liegt.

5. Leitschaufelstufe nach einem der Ansprüche 1 bis 4, wobei die Oberseite oder die Unterseite des Arms (5, 6a, 6b) zwischen der Position des Beginns der Neigung und dem Beginn des Abschlusses der Hinterkante etwa gerade ist.

6. Stufe nach einem der Ansprüche 1 und 5, wobei mindestens ein Arm (5), der kein Pylon (6a, 6b) ist, durch einen Skelettwinkel definiert ist, der im Bereich der Hinterkante (BF) den Ausströmungswert aufweist.

7. Stufe nach Anspruch 6, wobei der Arm (5), der kein Pylon (6a, 6b) ist, sich an der Oberseite des Pylons (6a, 6b) befindet, wobei der Skelettwinkel im Bereich der Hinterkante (BF) derart ausgerichtet ist, dass die Oberseite des Arms (5) an die Längsachse der Turbomaschine angenähert wird.

8. Stufe nach einem der Ansprüche 6 und 7, wobei der Arm (5), der kein Pylon (6a, 6b) ist, sich an der Unterseite des Pylons (6a, 6b) befindet, wobei der Skelettwinkel im Bereich der Hinterkante (BF) derart ausgerichtet ist, dass die Unterseite des Arms (5) an die Längsachse der Turbomaschine angenähert wird.

9. Stufe nach einem der Ansprüche 7 und 8, wobei der Ausströmungswert mit der Nähe des Arms (5) mit dem Pylon (6a, 6b) in absolutem Wert zunimmt.

10. Turbomaschine, umfassend eine Nebenstrom-Leitschaufelstufe nach einem der vorangehenden Ansprüche.

## Claims

1. A bypass flow guide vane stage of a turbofan, comprising
- a plurality of obstacles (4, 5, 6a, 6b) including at least one blade (4) and at least one arm (5, 6a, 6b),
- a platform (2) from which the obstacles (4, 5, 6a, 6b) extend,
**characterized in that** one arm (5, 6a, 6b) being a pylon (6a, 6b) is defined by a skeleton angle having, at the trailing edge (BF), a trailing value comprised between 5° and 13° with respect to the longitudinal axis of the turbine engine, said skeleton angle at the trailing edge (BF) being oriented so as to bring the suction side of the pylon (6a, 6b) closer to the longitudinal axis of the turbine engine.

2. The guide vane stage according to claim 1, wherein said trailing value is comprised between 7° and 11°.

3. The guide vane stage according to any of claims 1 and 2, wherein said arm (5, 6a, 6b) has an inclination start position situated at between 40% and 80% of the relative length of a chord extending from a leading edge (BA) to the trailing edge (BF) of the arm (5, 6a, 6b), said skeleton angle having, between the curvature start position and the trailing edge (BF), said trailing value.

4. The guide vane stage according to claim 3, wherein the inclination start position is situated at between 50% and 70% of the relative length of the chord.

5. The guide vane stage according to any of claims 1 to 4, wherein the suction side or the pressure side of the arm (5, 6a, 6b) is substantially rectilinear between the inclination start position and the beginning of the closure of the trailing edge.

6. The guide vane stage according to claims 1 to 5, wherein at least one arm (5) not being a pylon (6a, 6b) is defined by a skeleton angle having, at the trailing edge (BF) said trailing value.

7. The guide vane stage according to claim 6, wherein said arm (5) not being a pylon (6a, 6b) is situated at the suction side of the pylon (6a, 6b), said skeleton angle at the trailing edge (BF) being oriented so as to bring the suction side of the arm (5) closer to the longitudinal axis of the turbine engine.

8. The guide vane stage according to claims 6 and 7, wherein said arm (5) not being a pylon (6a, 6b) is situated at the pressure side of the pylon (6a, 6b), said skeleton angle at the trailing edge (BF) being oriented so as to bring the pressure side of the arm (5) closer to the longitudinal axis of the turbine engine.

9. The guide vane stage according to any of claims 7 and 8, wherein said trailing value increases in absolute value with the proximity of the arm (5) to the pylon (6a, 6b).

10. A turbine engine comprising a guide vane stage according to any of the preceding claims.
